# DEMANDE DE BREVET EUROPEEN

(11) **EP 1 835 742 A1**
(43) Date de publication de la demande: **19.09.2007**
(21) Numéro de dépôt: 06290423.0
(22) Date de dépôt: 13.03.2006
(51) Int. Cl.: H04N 7/173, H04N 5/00, H04N 7/167

(54) **Méthode de validation d'accès à un produit par un module de sécurité**

(71) Demandeur: Nagravision S.A., 1033 Cheseaux-sur-Lausanne (CH)
(72) Inventeur: Parisot, Laurence, 78140 Vélizy (FR)
(74) Mandataire: Wenger, Joel-Théophile

(57) **Abrégé**

La présente invention présente une méthode de validation d'accès à un produit (P1), par un module de sécurité (SM) associé à une unité d'utilisateur connectée, de manière unidirectionnelle, à un système de contrôle d'accès (CAS) transmettant des messages de gestion destinés audit module de sécurité (SM), lesdits messages étant générés par le système de contrôle d'accès (CAS) à la réception d'une requête d'un droit d'accès à un produit consistant en des données numériques diffusées, ladite requête provenant de l'unité d'utilisateur via un centre de gestion (CG), ladite méthode est caractérisée en ce qu'elle comprend les étapes suivantes:
- achat d'un produit (P1) proposé par l'unité d'utilisateur et décrémentation, dans le module de sécurité (SM), d'un montant associé au produit (P1) à partir d'un crédit restant,
- inscription d'un droit temporaire (D1t) dans ledit module de sécurité (SM) lorsque le crédit restant est égal ou supérieur au montant associé audit produit (P1),
- détermination d'un code (CP1) représentatif du produit acheté (P1) dont le droit temporaire (D1t) est inscrit dans le module de sécurité (SM),
- affichage dudit code (CP1) sur un organe de visualisation associé à l'unité d'utilisateur,
- transmission au centre de gestion (CG) d'une requête (RQ) comprenant au moins ledit code (CP1) et un identifiant (ID_{SM}') représentatif de l'identifiant (ID_{SM}) du module de sécurité (SM),
- vérification par le système de contrôle d'accès (CAS) de la validité du code (CP1) et de l'identifiant du module de sécurité (ID_{SM}), transmission d'un message de confirmation (CEMM) de droit à destination de l'unité d'utilisateur associée audit module de sécurité (SM),
- remplacement du droit temporaire (D1t) par un droit définitif (D1) dans le module de sécurité (SM).

## Description

La présente invention concerne le domaine de la télévision numérique à péage où des utilisateurs acquièrent des droits de consommation de produits diffusés contre un paiement. Ce dernier est débité d'un crédit stocké dans un module de sécurité associé à une unité d'utilisateur ou décodeur.

### Arrière plan technique

Le rôle d'un module de sécurité est de contrôler l'accès à un flux transportant des données numériques encryptées mises à disposition d'utilisateurs par un serveur de diffusion. En l'occurrence, dans le domaine de la télévision à péage, un décodeur permet d'accéder et de décrypter le flux de données audio/vidéo encryptées diffusé en fonction de droits enregistrés dans le module de sécurité associé audit décodeur.

Un module de sécurité se présente généralement sous la forme d'un module électronique protégé et réputé inviolable comme par exemple une carte à microprocesseur amovible insérée dans un lecteur approprié qui la connecte au décodeur.

Ce module de sécurité, équipé d'interfaces de communication, reçoit à partir d'un centre de gestion des messages destinés à gérer des droits d'accès aux données diffusées. Ces messages sont appelés messages d'administration ou de gestion EMM (Entitlement Management Message).

Le document WO03/085959 décrit un système comprenant un centre de gestion transmettant un flux de données encryptées par des mots de contrôle inclus dans des messages de contrôle (ECM). Le flux de données est destiné à au moins une unité d'utilisateur reliée à un module de sécurité identifié par une adresse unique. Ce module contient un crédit qui est décrémenté selon l'achat de produits ou de la consommation du flux de données. Pour recharger le crédit, l'utilisateur communique au centre de gestion un identifiant représentatif de l'adresse unique du module de sécurité et un code valeur représentant le montant de recharge. Le centre de gestion traite et vérifie le code valeur avant de transmettre au module de sécurité un message de gestion (EMM) encrypté permettant de recharger le crédit.

Lorsque le crédit est suffisant dans le module de sécurité deux modes d'achats sont possibles, à savoir:
- achat en local: l'utilisateur décide d'utiliser tout ou partie de son crédit pour acheter un produit. Ainsi, un nouveau droit est créé dans le module de sécurité pour la réception dudit produit après décrémentation du crédit.
- achat via le centre de gestion : l'utilisateur appelle le centre de gestion pour acheter un produit. Le centre de gestion envoie alors un message de gestion (EMM) encrypté contenant le droit d'accès audit produit ainsi que le montant à décrémenter du crédit du module de sécurité.

L'achat s'effectue dans les deux cas par le traitement de messages contenant un droit pour un produit ainsi que le coût correspondant. Si le crédit disponible est suffisant, le module de sécurité traite le message c'est-à-dire décrémente le crédit et valide le droit. Celui-ci libère l'accès à un produit diffusé lors de sa réception.

Dans le cas où le crédit stocké dans le module de sécurité serait insuffisant, le message de gestion EMM reçu est rejeté et l'accès au produit demandé impossible. Le même effet peut aussi se produire lorsque l'unité de l'utilisateur est mise hors service et de ce fait incapable de valider le droit requis. Le système de contrôle d'accès et le centre de gestion n'ont de ce fait aucune information sur l'utilisation réelle du crédit, ce qui représente un inconvénient lorsqu'il s'agit d'établir des décomptes pour les fournisseurs des produits.

Comme les unités d'utilisateurs ne disposent pas d'une voie de retour directe vers le système de contrôle d'accès, le taux de consommation effective des produits par rapport aux messages envoyés ne peut pas être déterminé. En effet, les messages émis étant plus nombreux que ceux effectivement traité localement pour libérer l'accès au produit, le centre de gestion risque de payer aux fournisseurs des excédants de droits et/ou de produits qui n'ont jamais été consommés, ni payés par les utilisateurs.

### Description sommaire de l'invention

Le but de la présente invention est de pallier les inconvénients soulevés ci-dessus en permettant au centre de gestion d'assurer un meilleur contrôle des droits fournis aux utilisateurs par le biais des messages d'administration. En effet, le centre de gestion transmet les messages uniquement lorsque le crédit stocké dans le module de sécurité de l'unité d'utilisateur est suffisant.

Ce but est atteint par une méthode de validation d'accès à un produit par un module de sécurité associé à une unité d'utilisateur connectée, de manière unidirectionnelle, à un système de contrôle d'accès transmettant des messages de gestion destinés audit module de sécurité, lesdits messages étant générés par le système de contrôle d'accès à la réception d'une requête d'un droit d'accès à un produit consistant en des données numériques diffusées, ladite requête provenant de l'unité d'utilisateur via un centre de gestion, ladite méthode est caractérisée en ce qu'elle comprend les étapes suivantes:
- achat d'un produit proposé par l'unité d'utilisateur et décrémentation, dans le module de sécurité, d'un montant associé au produit à partir d'un crédit restant,
- inscription d'un droit temporaire dans ledit module de sécurité lorsque le crédit restant est égal ou supérieur au montant associé audit produit,
- détermination d'un code représentatif du produit acheté dont le droit temporaire est inscrit dans le module de sécurité,
- affichage dudit code sur un organe de visualisation associé à l'unité d'utilisateur,
- transmission au centre de gestion d'une requête comprenant au moins ledit code et un identifiant représentatif de l'identifiant du module de sécurité,
- vérification par le système de contrôle d'accès de la validité du code et de l'identifiant du module de sécurité, transmission d'un message de confirmation de droit à destination de l'unité d'utilisateur associée audit module de sécurité,
- remplacement du droit temporaire par un droit définitif dans le module de sécurité.

La solution consiste à prouver au système de contrôle d'accès que le module de sécurité est effectivement apte à créer un droit pour l'acquisition d'un produit sélectionné. Lors de l'achat du produit, une décrémentation ou un débit est effectué localement dans le module de sécurité. En cas de réussite du débit avec un crédit restant suffisant, un droit temporaire est stocké dans le module de sécurité. Un code identifiant ce droit propre au produit est associé au numéro unique identifiant le module de sécurité puis transmis au centre de gestion sous forme de requête de droit. A la réception de la requête, le système de contrôle d'accès génère un message de confirmation de droit comprenant le droit définitif et le code identifiant comme condition d'accès au droit définitif. Le module de sécurité reçoit ce message de confirmation et remplace le droit temporaire par le droit définitif du message seulement si le code identifiant correspond au droit temporaire. L'accès au produit est ainsi autorisé. Dans le cas contraire d'un identifiant de droit définitif différent ou non compris dans les droits temporaires, le message de gestion est rejeté et l'accès au produit est refusé par défaut d'un droit valide.

L'avantage de cette méthode est que le message de confirmation est généré et transmis par le système de contrôle d'accès seulement si le débit du module de sécurité a pu être effectué avec succès. Autrement dit, en cas de crédit initial insuffisant par rapport à celui exigé par le produit, une requête au centre de gestion ne peut être générée.

Le centre de gestion et le système de contrôle d'accès sont en général deux entités séparées. La première consiste en une interface avec l'utilisateur gérant les requêtes de droits, tandis que la seconde génère les messages de gestion à destination des unités d'utilisateurs selon les requêtes reçues de la première entité. Dans certaines configurations ces deux entités peuvent être regroupées dans un système de gestion global.

### Brève description des figures

L'invention sera mieux comprise grâce à la description détaillée qui va suivre et qui se réfère aux figures annexées données à titre d'exemples nullement limitatif.
- La figure 1 illustre un schéma bloc d'un système exécutant une première variante de la méthode dans laquelle une requête d'un droit d'accès adressée au centre de gestion comprend un code d'achat propre au produit acheté.
- La figure 2 illustre un schéma bloc d'un système exécutant une seconde variante de la méthode dans laquelle une requête d'un droit d'accès adressée au centre de gestion comprend un code d'achat calculé à partir des identifiants du module de sécurité et du produit.

### Description détaillée de l'invention

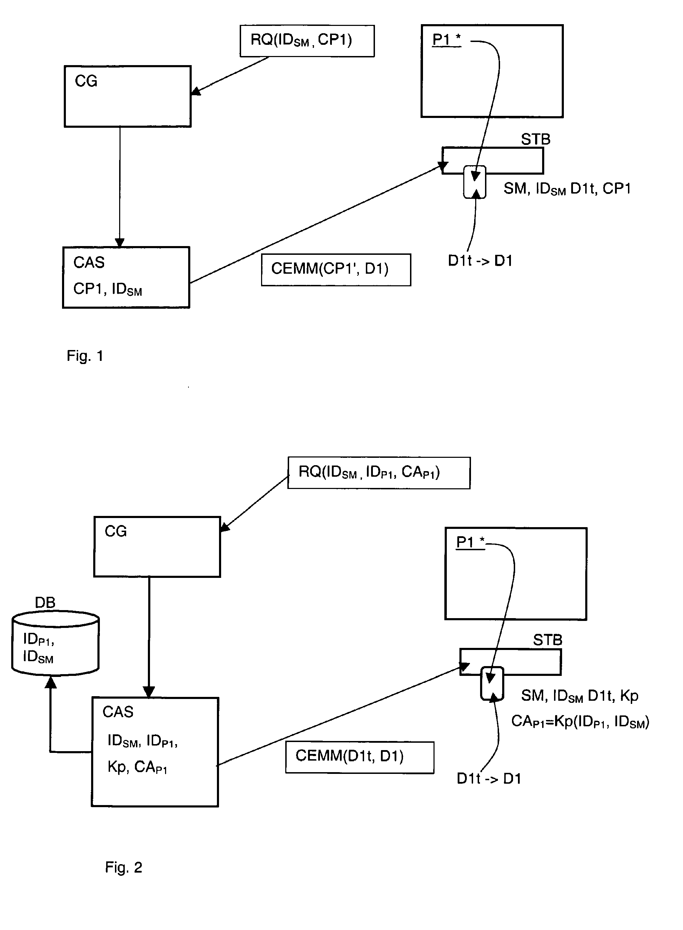

Dans la première variante de la méthode schématisée par la figure 1, un produit (P1) est sélectionné par l'utilisateur dans une liste affichée sur un écran de télévision par exemple. L'achat du produit enclenche un processus de débit d'un crédit stocké dans le module de sécurité (SM) associé à l'unité d'utilisateur (STB) ou décodeur. Ce processus correspond à un achat provisoire du produit (P1) qui sera validé par la suite par le système de contrôle d'accès (CAS).

Un droit temporaire (D1t) est inscrit dans le module de sécurité (SM) lorsque la montant du produit (P1) correspond à un débit inférieur ou égal au crédit restant dans le module (SM). Un code (CP1) propre au produit (P1) acheté est soit généré à partir du droit temporaire (D1t), soit extrait de la description du produit (P1). Selon un exemple de configuration, ce code peut être mémorisé par le module de sécurité (SM) et associé au droit temporaire (D1t) lorsque le débit a été effectué.

Une application installée dans le décodeur (STB) permet d'afficher ce code pour l'utilisateur, par exemple sur un écran de télévision ou sur un affichage graphique séparé. Pour confirmer l'achat, l'utilisateur transmet ce code (CP1) au centre de gestion (CG) avec l'identifiant de son module de sécurité (ID_{SM}).

Ce message RQ(ID_{SM}, CP1) est transmis à un centre de gestion (CG) via un canal de communication généralement indépendant du décodeur (STB), par exemple via le réseau téléphonique fixe ou mobile, Internet ou autre canal de transmission.

La requête RQ(ID_{SM}, CP1) peut être transmise soit dans un message court SMS, par le biais d'un serveur vocal, par courrier électronique ou sur tout autre support accepté par le centre de gestion (CG).

Selon un exemple de réalisation, le décodeur transmet la requête à un téléphone mobile via une liaison sans fil du type Bluetooth ou infrarouge IrDA (Infrared Data Association). Un message court (SMS) est ensuite créé à partir des données reçues et transmis au centre de gestion via le réseau mobile.

Selon un autre exemple, le décodeur est équipé d'une connexion temporaire avec le centre de gestion établie seulement pour la transmission de la requête.

Le centre de gestion (CG) fournit les paramètres de la requête au système de contrôle d'accès (CAS) qui vérifie d'abord la conformité de l'identifiant (ID_{SM}) du module de sécurité ainsi que du code produit (CP1). Un résultat positif de la vérification autorise la génération d'un message de confirmation (CEMM) contenant l'identifiant du droit définitif (D1).

Le module de sécurité (SM) reçoit le message (CEMM) par l'intermédiaire du décodeur (STB) et remplace le droit temporaire (D1t) par le droit définitif (D1) si le droit temporaire (D1t) était effectivement stocké dans le module de sécurité (SM). Ainsi l'achat préalable effectué auparavant est validé en autorisant l'accès au produit (P1).

Dans un but de vérification, le message de confirmation comprend de plus un code produit (CP1') et le droit définitif (D1) remplace le droit temporaire (D1t) seulement si le code produit (CP1') correspond au produit (P1) acheté précédemment. Dans la variante où le module de sécurité mémorise le code produit (CP1), le code (CP1') retourné par le message de confirmation (CEMM) doit être identique au code (CP1) stocké.

La sécurité de cette première variante de cette méthode peut être mise en cause par une attaque du système consistant en la transmission répétée de requêtes RQ(ID_{SM}, CP1) avec des identifiants (ID_{SM}) de modules de sécurité (SM) valides accompagnés chacun d'un code de produit (CP1) également valide. Ces requêtes risquent de surcharger le système de contrôle d'accès par l'envoi de messages confirmation (CEMM) qui ne seront jamais validés. De plus, les statistiques et le décompte des produits consommés destinés aux fournisseurs seront grandement faussés. En effet, le système de contrôle d'accès (CAS) transmet un nombre important de messages (CEMM) inutiles sans nécessairement autoriser un accès à un produit (P1). Malgré un identifiant de module de sécurité (ID_{SM}) valide, le droit définitif (D1) peut être invalide en ne correspondant à aucun droit temporaire (D1t) et entraînant le rejet, par l'unité qui le reçoit, du message de confirmation (CEMM).

La parade à cette attaque consiste d'une part à calculer par le module de sécurité (SM) l'identifiant (ID_{D1t}) du droit temporaire à partir de l'identifiant (ID_{P1}) du produit (P1) acheté et de celui du module de sécurité et d'autre part à encrypter cet identifiant du droit temporaire (ID_{D1t}) avec une clé personnelle (Kp) de l'unité d'utilisateur. Le cryptogramme ainsi obtenu forme un code d'achat (CA_{P1}).

La requête RQ(ID_{SM}, CA_{P1}, ID_{P1}) de droit au centre de gestion (CG) comprend alors l'identifiant du module de sécurité (ID_{SM}), le code d'achat (CA_{P1}) et l'identifiant du produit acheté (ID_{P1}). A la réception de la requête RQ(ID_{SM}, CA_{P1}, ID_{P1}), le système de contrôle d'accès (CAS) recalcule le code d'achat (CA_{P1}) connaissant la clé personnelle (Kp) de l'unité d'utilisateur, l'identifiant du produit (ID_{P1}) et l'identifiant du module de sécurité (ID_{SM}). Il peut ainsi déterminer si le code d'achat (CA_{P1}) reçu est valide avant de préparer le message de confirmation (CEMM) en réponse à la requête. En cas de réussite de la comparaison, le système de contrôle d'accès (CAS) transmet le message (CEMM) conditionnel contenant le droit définitif (D1) autorisant l'accès au produit (P1).

Cette variante de la méthode présente l'avantage de rendre l'attaque systématique décrite ci-dessus beaucoup plus difficile car le code d'achat (CA_{P1}) dépend à la fois des identifiants du module de sécurité (ID_{SM}) et du produit (ID_{P1}) et non plus de l'identifiant du produit (ID_{P1}) seul comme dans la variante précédente. Le code d'achat (CA_{P1}) est en outre encrypté avec une clé personnelle (Kp) tenue secrète du module de sécurité (SM).

Cette seconde variante illustrée par la figue 2 permet d'obtenir une sécurité accrue du processus au moyen d'un code d'achat (CAp₁) plus évolué qui ne dépend pas uniquement du produit acheté (P1) mais également du module de sécurité (SM). En effet, ce dernier calcule ce code (CA_{P1}) à partir des identifiants du produit (ID_{P1}) et de celui du module de sécurité (ID_{SM}) en les encryptant avec une clé personnelle (Kp) de l'unité d'utilisateur (STB). Le cryptogramme Kp(ID_{P1}, ID_{SM}) ou code d'achat (CA_{P1}) obtenu est affiché sur les moyens de visualisation disponibles afin d'être transmis au centre de gestion (CG) par le canal de communication. Il est à noter que la clé personnelle (Kp) peut être soit du type symétrique, soit asymétrique.

Le centre (CG) achemine la requête RQ(ID_{SM}, CA_{P1}, ID_{P1}) vers le système de contrôle d'accès (CAS) pour vérification de la conformité des identifiants du module de sécurité (ID_{SM}) et du produit (ID_{P1}) ainsi que du code d'achat (CA_{P1}). Ce dernier est recalculé par le système de contrôle d'accès (CAS) puis comparé avec celui contenu dans la requête

Lorsque la validité du contenu du cryptogramme Kp(ID_{P1}, ID_{SM}) est établie, le système de contrôle d'accès (CAS) génère un message de confirmation conditionnel (CEMM) contenant le droit définitif (D1) et un identifiant du droit temporaire (D1t) comme condition d'acceptation du message.

Ce message (CEMM) est de préférence encrypté par une clé personnelle audit module de sécurité (SM). Comme dans la première variante, le droit (D1) du message de confirmation (CEMM) remplace le droit temporaire (D1t) lorsque l'identifiant temporaire est correct. Ce droit (D1) définitif permet l'accès au produit (P1) acheté.

Lorsque la vérification ne réussit pas, le système de contrôle d'accès (CAS) ne génère aucun message (CEMM). Si le cryptogramme Kp(ID_{P1}, ID_{SM}) est incorrect, aucun message (CEMM) n'est envoyé et le droit temporaire (D1t) persiste. Dans les deux cas, l'accès au produit (P1) "pré-acheté" reste interdit par l'absence d'un droit (D1) définitif dans le module de sécurité (SM).

Les deux variantes permettent au système de contrôle d'accès (CAS) de stocker respectivement les identifiants (ID_{SM}, ID_{P1}) du module de sécurité (SM) et du produit acheté (P1) dans une base de données (DB). Cet enregistrement a lieu de préférence lorsque la vérification du code produit (CP1) respectivement du code d'achat (CA_{P1}) a réussi. Il permet d'établir un historique, des décomptes et des statistiques des produits achetés par les unités d'utilisateurs afin de rétribuer les fournisseurs des produits.

Une méthode simplifiée consiste à transmettre au centre de gestion une information représentative du crédit. Avant un achat, l'utilisateur demande la génération d'un code d'achat à l'unité d'utilisateur. Ce code est formé du crédit restant et de l'identifiant du module de sécurité. Il peut être également complété par une valeur temporelle telle que la date.

Ce code est transmis par l'utilisateur avec l'identifiant de son module de sécurité et celui du produit qu'il souhaite acquérir. Le système de contrôle d'accès ou le centre de gestion extrait du code la valeur du crédit en fonction de l'identifiant du module de sécurité reçu. Si le crédit est suffisant par rapport à la valeur du produit, un message d'achat correspondant, contenant le droit et le montant du produit, est envoyé à destination du module de sécurité. Celui-ci vérifie qu'effectivement le crédit est suffisant pour le produit souhaité avant de mémoriser le droit et ainsi permettre l'accès au produit.

Il est à noter que cette méthode simplifiée n'est pas plus sûre que la première variante de la figure 1 en étant tout aussi vulnérable à l'attaque consistant à saturer le système de contrôle d'accès comme décrit plus haut.

## Revendications

1. Méthode de validation d'accès à un produit (P1), par un module de sécurité (SM) associé à une unité d'utilisateur connectée, de manière unidirectionnelle, à un système de contrôle d'accès (CAS) transmettant des messages de gestion destinés audit module de sécurité (SM), lesdits messages étant générés par le système de contrôle d'accès (CAS) à la réception d'une requête d'un droit d'accès à un produit consistant en des données numériques diffusées, ladite requête provenant de l'unité d'utilisateur via un centre de gestion (CG), ladite méthode est **caractérisée en ce qu'**elle comprend les étapes suivantes:
- achat d'un produit (P1) proposé par l'unité d'utilisateur et décrémentation, dans le module de sécurité (SM), d'un montant associé au produit (P1) à partir d'un crédit restant,
- inscription d'un droit temporaire (D1t) dans ledit module de sécurité (SM) lorsque le crédit restant est égal ou supérieur au montant associé audit produit (P1),
- détermination d'un code (CP1) représentatif du produit acheté (P1) dont le droit temporaire (D1t) est inscrit dans le module de sécurité (SM),
- affichage dudit code (CP1) sur un organe de visualisation associé à l'unité d'utilisateur,
- transmission au centre de gestion (CG) d'une requête (RQ) comprenant au moins ledit code (CP1) et un identifiant (ID_{SM}') représentatif de l'identifiant (ID_{SM}) du module de sécurité (SM),
- vérification par le système de contrôle d'accès (CAS) de la validité du code (CP1) et de l'identifiant du module de sécurité (ID_{SM}), transmission d'un message de confirmation (CEMM) de droit à destination de l'unité d'utilisateur associée audit module de sécurité (SM),
- remplacement du droit temporaire (D1t) par un droit définitif (D1) dans le module de sécurité (SM).

2. Méthode selon la revendication 1, **caractérisée en ce que** le message de confirmation (CEMM) comprend un code produit (CP1') et **en ce que** le droit définitif (D1) du message de confirmation (CEMM) remplace le droit temporaire (D1t) stocké dans le module de sécurité (SM) lorsque le code produit (CP1') du message de confirmation (CEMM) correspond au produit (P1) acheté précédemment, ledit droit définitif (D1) autorisant l'accès au produit acheté (P1).

3. Méthode selon la revendication 1 ou 2, **caractérisée en ce que** le code produit (CP1') correspond au code (CP1) transmis dans la requête adressée au centre de gestion.

4. Méthode selon les revendications 1 à 3, **caractérisée en ce que** le code (CP1) est contenu dans un message de gestion général relatif au produit (P1) diffusé ou à diffuser.

5. Méthode selon les revendications 1 à 4, **caractérisée en ce que** la requête (RQ) est transmise au centre de gestion (CG) via un canal de communication indépendant de l'unité d'utilisateur (STB).

6. Méthode selon les revendications 1 à 3, **caractérisée en ce que** le code consiste en un cryptogramme Kp(ID_{SM}, ID_{P1}), formé par un identifiant (ID_{P1}) du produit (P1) acheté et l'identifiant (ID_{SM}) du module de sécurité (SM) encryptés avec une clé (Kp) personnelle de l'unité d'utilisateur (STB).

7. Méthode selon la revendication 5 **caractérisée en ce que** la requête (RQ) comprend de plus l'identifiant (ID_{P1}) du produit (P1) acheté.

8. Méthode selon les revendications 1 à 7, **caractérisée en ce que** le système de contrôle d'accès (CAS) vérifie la conformité du code (CP1) ou du cryptogramme Kp(ID_{SM}, ID_{P1}) et la conformité de l'identifiant du module de sécurité et autorise l'envoi du message de conformation (CEMM) seulement si la vérification est positive.

9. Méthode selon les revendications 6 à 8, **caractérisée en ce que** le système de contrôle d'accès (CAS), à la réception de la requête (RQ), recalcule le cryptogramme Kp(ID_{SM}, ID_{P1}) à partir des identifiants (ID_{SM}, ID_{P1}) du module de sécurité et du produit et le compare avec le cryptogramme contenu dans la requête (RQ), lorsque le résultat de la comparaison est positif, le système de contrôle d'accès (CAS) transmet un message de confirmation (CEMM) contenant un droit définitif (D1) et un identifiant du droit temporaire (D1t) comme condition d'acceptation dudit message.
